# FASCICULE DE BREVET EUROPEEN

(11) **EP 3 338 047 B1**
(45) Date de publication et mention de la délivrance du brevet: **06.05.2020**
(21) Numéro de dépôt: 16770049.1
(22) Date de dépôt: 19.08.2016
(51) Int. Cl.: F28D 20/02

(54) **UNITE DE STOCKAGE D'UNE ENERGIE THERMIQUE**
EINHEIT ZUR SPEICHERUNG VON WÄRMEENERGIE
UNIT FOR STORING THERMAL ENERGY

(30) Priorité: 20.08.2015 FR 1557830; 20.08.2015 FR 1557844
(43) Date de publication de la demande: 27.06.2018
(73) Titulaire: Hutchinson, 75008 Paris (FR)
(72) Inventeur: CHOPARD, Fabrice, 75008 Paris (FR); BLINE, Paul, 75008 Paris (FR); HUILLET, Cédric, 75008 Paris (FR); GEFFRAY, Fanny, 75008 Paris (FR); CHAUVET, Boris, 75008 Paris (FR); POUPA, Nadine, 75008 Paris (FR); DOMINIAK, Christophe, 75008 Paris (FR)
(74) Mandataire: Pichat, Thierry
(86) Numéro de dépôt international: PCT/FR2016/052100
(87) Numéro de publication internationale: WO 2017/029463

(56) Documents cités:
- WO-A1-2012/112050
- DE-U1- 29 914 113
- US-A1- 2011 030 915
- US-A1- 2013 105 106

## Description

La présente invention concerne :
- une unité de stockage et de restitution de cette énergie,
- et un circuit de lubrification d'un moteur équipé d'une telle unité. Une unité de stockage selon le préambule de la revendication 1 est connue du WO-A1-2012/112050.

Des dispositifs de stockage et de gestion thermique à matériau(x) MCP ont déjà été proposés, l'énergie étant apportée par un fluide frigorigène ou caloporteur. L'énergie est stockée pendant une phase dite de charge, au moment où l'énergie est disponible, et est libérée ensuite, pendant une phase dite de décharge.

Parmi les problèmes ici traités, on notera :
- l'importance des surfaces d'échange avec le fluide en circulation,
- le temps de séjour du fluide lors des échanges thermiques,
- l'adaptation en fonction des demandes des clients et des volumes en cause à traiter,
- le compromis entre la capacité de stockage d'énergie et la conservation dans le temps de cette énergie,
- les conditions de fabrication en série (coûts/facilité),
- adaptation possible au domaine automobile notamment,
- maîtrise des dimensions et poids.

C'est dans ce contexte, et pour répondre à une partie au moins de ces problèmes, qu'est ici proposée une unité de stockage et de restitution d'une énergie thermique avec les caractéristiques de la revendication 1.

Ainsi, on associera une conception modulaire avec une possible réalisation en série et une performance énergétique que des résultats de tests ont montrées.

Des tirants ou des collages ou soudages peuvent convenir pour lier ensemble axialement les blocs modulaires. Un joint pourra bien sûr être associé à la surface de joint

Il est précisé qu'un matériau à changement de phase - ou MCP-désignera tout matériau capable de changer d'état physique. Le stockage thermique peut s'opérer par utilisation de sa Chaleur Latente (CL) : le matériau peut alors stocker ou céder de l'énergie par simple changement d'état, tout en conservant une température et une pression sensiblement constante, celle du changement d'état.

Pour équilibrer les temps de séjour entre les chambres des blocs Unité selon la revendication 1, où les éléments (13) à matériau MCP autour desquels circule le fluide sont disposés en vrac dans les chambres.

Une considération a aussi été de favoriser la circulation du fluide ainsi que les échanges thermiques dans chaque bloc.

Aussi est-il proposé que plusieurs blocs modulaires soient empilés suivant un axe, et que chaque bloc comprenne un passage de communication traversant le fond de sa chambre, pour laisser le fluide circuler d'une chambre à une autre, deux passages successifs étant décalés d'un passage au suivant parallèlement audit axe, pour définir des chicanes.

Un avantage de la solution modulaire ici présentée est de pouvoir adapter les positions relatives des blocs afin de satisfaire au mieux au contexte. Il est ainsi possible que l'on ait nécessité de disposer deux modules adjacents avec leurs chambres face à face ou dos à dos, par exemple.

On attend aussi de la solution une modularité permettant de s'adapter aux exigences de chaque cas d'implantation, une performance énergétique élevée, une fabrication possible en série, et un coût de revient compatible avec une telle fabrication adaptée au domaine automobile.

Pour favoriser encore davantage cette fabrication et une uniformité des temps de séjour, les éléments à matériau MCP de l'unité, autour desquels circule le fluide, seront favorablement disposés en vrac dans les chambres.

Une facilité de mise en place et une optimisation des surfaces d'échange seront ainsi atteintes.

A nouveau pour parfaire l'isolation thermique et favoriser encore la fabrication en série, il est par ailleurs conseillé :
- que où certains au moins des éléments de gestion thermique comprenant un matériau MCP soient disposés dans au moins une enveloppe flexible, laquelle pourra éventuellement contenir aussi du matériau isolant thermique; ceci permettra de créer un ou plusieurs panneaux continus autour des chambres (à la différence des tubes 2b de US 2011/0030915), voire de prévoir une réalisation sous forme d'un panneau PIV et/ou un conditionnement pratique, y compris si cette(ces) enveloppe(s) devai(en)t être intégrée(s) dans le matériau de constitution desdites parois extérieures des corps,
- et/ou que certains au moins des éléments de gestion thermique comprenant un matériau isolant thermique soient sous vide d'air partiel (constitution PIV), voire disposés autour desdites parois extérieures des blocs,
- et/ou que le corps de chaque bloc modulaire intègre dans lesdites parois extérieures au moins une cavité qui reçoit certains au moins des éléments d'isolation thermique comprenant un matériau MCP.

La solution d'intégration permet de prévoir une fabrication par moulage, avec des corps en polymère, une standardisation accrue et une facilité et sécurité de mise en œuvre. Une disposition à l'extérieur, en périphérie, permet une adaptation à certaines dimensions, voire aux champs de mise en place. La référence à une paroi ou un corps en matériau moulable couvre tant les résines thermoplastiques chargées de fibres et injectées que les résines thermodurcissables imprégnant un tissu ou un mat, tel un tissé ou un non tissé.

Pour associer une fabrication en série, une fiabilité de mise en place et une efficacité quant à la gestion thermique périphérique, il est par ailleurs proposé que les corps soient empilés ensemble de façon qu'extérieurement lesdites parois extérieures définissent des appuis contre lesquels sont appliqués les panneaux PIV, lesquels seront alors bloqués latéralement par des excroissances qui maintiendront un espace ayant sensiblement l'épaisseur desdits panneaux PIV, entre les parois extérieures des corps et une enveloppe extérieure qui entourera les blocs.

Pour éviter les déperditions énergétiques et optimiser encombrement et poids, les blocs modulaires sont empilés suivant un axe, et les passages de communication traversent les fonds des chambres.

Ceci alliera modularité / performance énergétique élevée / adaptabilité / facilité de maintenance.

Et pour protéger les blocs isolés, compléter encore cette isolation, et favoriser l'intégration dans le véhicule, tout en visant toujours une fabrication en grande série, il est encore proposé que, les blocs étant formés en pile pour réaliser l'unité visée, les premier et/ou dernier blocs de cette pile reçoivent au moins un couvercle qui, face à une dite ouverture de chambre, ferme celle-ci, chaque couvercle étant pourvu d'un dit élément d'isolation thermique comprenant un matériau thermiquement isolant et d'une connectique pour le raccordement de ladite unité de stockage à un circuit extérieur de fluide frigorigène ou caloporteur.

Appliquer la solution à module(s) fonctionnel(s) présentée ci-avant aura tout sens sur un circuit de lubrification d'un moteur définissant un chemin de circulation d'un lubrifiant (typiquement de l'huile) sur lequel sont disposés, en communication fluide, des organes fonctionnels du moteur à lubrifier, un carter de lubrifiant (même si le réservoir est ailleurs, comme dans un carter sec) et ce(s) module(s) fonctionnel(s).

Dans ce cadre, il est même prévu une application privilégiée (car intégrée) où un circuit de lubrification d'un moteur définira un chemin de circulation d'un lubrifiant sur lequel seront disposés, en communication fluide, des organes fonctionnels du moteur à lubrifier, un carter de lubrifiant et une unité présentant tout ou partie des caractéristiques précitées ou certaines au moins de celles pouvant suivre.

Si nécessaire, l'invention sera encore mieux comprise et d'autres caractéristiques, détails et avantages de celle-ci apparaîtront encore à la lecture de la description qui suit, faite à titre d'exemple non limitatif et en référence aux dessins annexés, dans lesquels :
- la figure 1 schématise une unité stockeur/échangeur,
- les figures 2,3 montrent un module de l'unité, dans deux réalisations possibles, en éclaté,
- les figures 4 à 10 et 11 schématisent différents exemples de réalisation de poches PIV, ou mixtes MCP/PIV, en coupe ; on doit imaginer que la bande continue latéralement figures 6-8, ainsi que figure 10 avec la paroi latérale (5 ci-après), et que ces poches (avec leurs zones de liaison 21 si elles existent) sont fermées sur tous leurs côtés (tels qu'en zones 49a,49b ci-après) pour permettre le vide interne partiel,
- la figure 10 schématise aussi une intégration de telles poches et zones de liaison 21 dans l'épaisseur d'une dite paroi latérale 5,
- la figure 11 schématise aussi un corps de module à chicanes internes,
- et les figures 12,13 schématisent deux montages, sur un circuit d'huile.

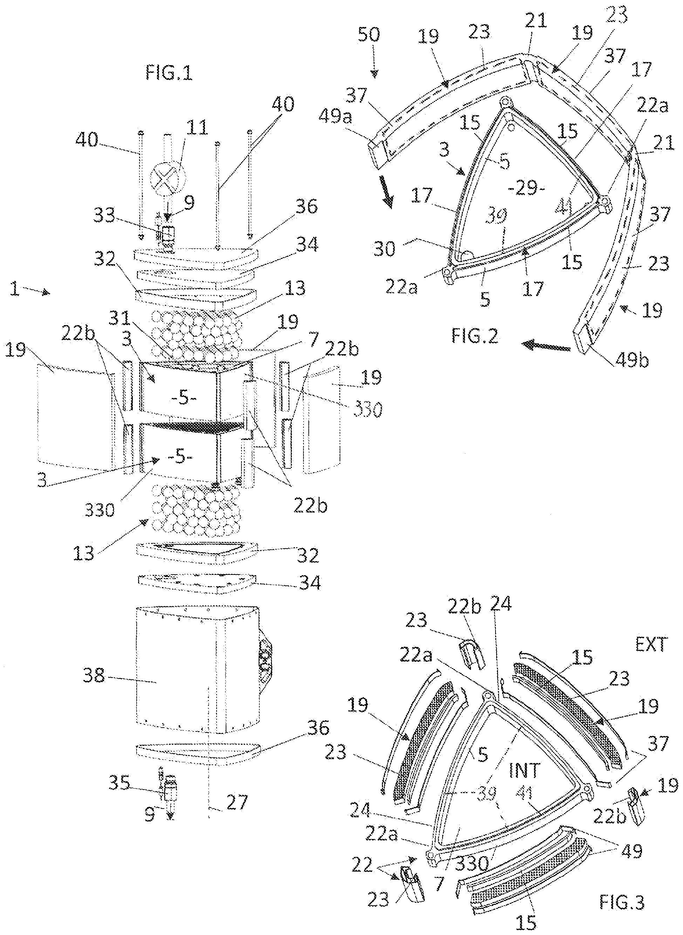

Il doit être considéré que les exemples de solutions opérationnelles présentées ci-après et les versions illustrées peuvent se combiner entre elles. Des mélanges de solutions peuvent ainsi en être aisément déduites, comme par exemple figure 2 une absence d'excroissance 22a sur un corps 330, ou une absence de liaisons 21 entre les poches 19.

Les schémas des figures (notamment figure 1) représentent donc tout ou partie d'une unité 1 de stockage, et favorablement de restitution ultérieure, d'une énergie thermique apportée par un fluide 9 frigorigène ou caloporteur.

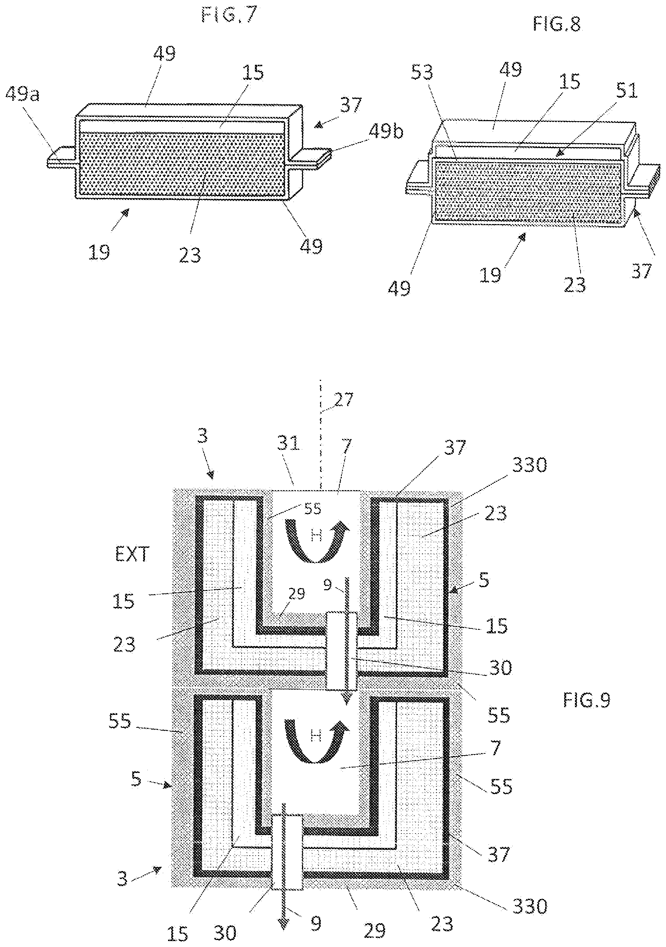

De construction modulaire, l'unité 1 comprend :
- plusieurs structures ou modules 3, chacun pourvu d'un corps 330 ayant une paroi périphérique 5 et un fond 29 entourant un volume intérieur (ou chambre) 7 où sont présents le fluide 9 frigorigène ou caloporteur, à faire circuler dans lesdits volumes sous l'action de moyens 11 de circulation, et des éléments 13 de stockage et de restitution (ultérieure) d'une énergie thermique,
- au moins une couche ou élément 15 contenant un matériau MCP qui peut être disposée dans la paroi périphérique 5 (par exemple dans au moins une cavité périphérique 17 de cette paroi, comme montré figure) ou autour de ladite paroi périphérique, en particulier dans la ou les enveloppes 37 des figures 8,9 notamment,
- des éléments 19 à matériau thermiquement isolant 23 et de préférence à constitution PIV disposés latéralement autour de chaque volume 7, individuellement (figure 2) ou par groupe (figure 1) .

Les modules 3 sont disposés suivant un axe d'empilement 27. Et chaque fond 29 est transversal à la paroi périphérique 5 (en en réunissant les côtés) et ici opposé, suivant l'axe 27, à une ouverture 31 par laquelle on peut placer ou retirer du volume 7 correspondant les éléments 13 qui peuvent être des billes ou des sphères.

Par « constitution PIV », on entend une structure sous vide d'air partiel contenant au moins un matériau isolant thermique a priori poreux. On notera toutefois que l'expression « sous vide d'air » (par exemple entre 10⁰Pa et 10 ⁴Pa) inclut le cas où ce vide partiel serait remplacé par une « atmosphère contrôlée » : les poches isolantes seraient remplies par un gaz ayant une conductivité thermique inférieure à celle de l'air ambiant (26mW/m.K).

Et « Poreux » désigne un matériau possédant des interstices permettant le passage de l'air. Les matériaux poreux, à cellules ouvertes, incluent donc les mousses mais également les matériaux fibreux (tels que la laine de verre ou de roche). Les interstices de passage que l'on peut qualifier de pores ont des tailles inférieures à 1 ou 2mm de façon à pouvoir garantir une bonne isolation thermique, et de préférence à 1micron, et préférentiellement encore à 10⁻⁹m, pour des questions en particulier de tenue au vieillissement et donc de possible dépression moins forte dans l'enveloppe PIV.

Comme montré figure 3, des excroissances 22 de maintien fixées avec la/les parois périphériques 5 peuvent être prévues, notamment dans les angles des parois extérieures formant la paroi périphérique 5, deux excroissances délimitant entre elles, latéralement et autour de la paroi périphérique, un espace 24 ouvert où est disposé l'un au moins des éléments 19 isolants thermiques à constitution PIV.

A ce sujet, le mode de réalisation de la figure 2 prévoit une alternative où les poches 19 sont toujours individuelles mais ne sont plus indépendantes les unes des autres. Il s'agit d'une série de telles poches 19 à constitution PIV réunies par des portions intermédiaires 21 où deux poches successives peuvent s'articuler l'une par rapport à l'autre.

Chaque poche contiendra au moins un matériau isolant thermique 23, et s'étendra latéralement (transversalement à l'axe 27) autour d'un volume 7 (de préférence tout autour), pour l'isoler thermiquement de l'extérieur (EXT) avec son contenu, les couches 15/23 définissant des éléments de gestion thermique de la température dans les volumes 7.

La, ou chaque, couche 15 contenant un matériau MCP peut être disposée dans la ou les cavités quasi périmétriques 17 de la paroi 5 ou tout autour de cette paroi, en particulier à l'intérieur des poches 19.

Dans cette solution à poches 19 disposées latéralement autour de la paroi 5, un manchon ou fourreau 38 de protection mécanique ouvert aux deux extrémités, par exemple en plastique dur, enveloppe les modules 3, les pièces 32,34,36 et les poches 19, lesquelles sont donc interposées entre les parois 5 et ce fourreau. S'étendant autour des excroissances 22 et des éléments isolants thermiques à constitution PIV 19, le manchon 38 participe au maintien des éléments 19 dans les espaces 24, comme montré figure 3.

Les excroissances de maintien 22 pourront être en plusieurs parties. Ainsi voit-on notamment figure 3 une solution où elles sont en deux parties 22a,22b. La partie 22b est amovible et peut se fixer, par des coopérations de formes entre elles, avec la partie 22a qui est monobloc avec la paroi périphérique 5, en périphérie extérieure de celle-ci. Les parties amovibles 22b peuvent chacune se présenter comme un clip ou un embout à engager par déformation élastique forcée, ou par coulissement latéral, autour de la partie fixe 22a. Ces parties de maintien 22b peuvent être thermiquement isolantes et renfermer pour cela une couche 23 en matériau isolant thermique (qui peut donc être à constitution PIV, comme une poche 19).

Typiquement, les corps 330 des modules 3 présenteront des angles et les excroissances de maintien 22 se présenteront comme des baguettes s'étendant dans les angles, comme illustré.

A l'inverse de ce qui précède, plutôt que d'être donc creuse comme un clip, la partie amovible 22b pourrait présenter une saillie vers un creux extérieur de la partie fixe 22a pour coopérer avec. Autre possibilité : les deux parties 22a,22b n'en formerait qu'une pour définir une excroissance monobloc avec la paroi 5.

Les parois périphériques 5 et fonds 29 des modules ou structures 3, qui peuvent être monoblocs, pourront notamment être en polyamide, en autre polymère rigide (polyéthylène moyenne ou haute densité, par exemple), ou en composite (chargée de fibres), voire en métal.

Des passages 30 communiquant au moins deux à deux, à travers les fonds 29, permettent au fluide 9 (qui peut être de l'eau ou de l'huile, voire un gaz, tel de l'air), de circuler, depuis une entrée 33 jusqu'à une sortie 35, entre les modules ou structures 3. Ce fluide 9 va globalement circuler suivant l'axe 27.

Favorablement, les passages 30 assureront une communication directe entre deux chambres ou volumes 7 successifs, sans sortir de l'encombrement hors tout des modules 3 réunis.

Là où cela est nécessaire, dès lors que les structures ouvertes 3 peuvent être disposées notamment dos à dos (figure 1) ou au contraire face à face, un ou plusieurs couvercles 32, ici deux doubles, ferment les ouvertures 31 des modules extrêmes, de façon à étancher chaque volume 7. Extérieurement, chaque couvercle 32 peut être doublé par une poche unique 34 à constitution PIV. Et une plaque 36 de protection mécanique peut fermer le tout, suivant l'axe 27, comme illustré.

Les entrée 33 et sortie 35, qui traversent les pièces 32,34,36 si elles existent, pour déboucher dans les volumes 7 respectifs, définissent des éléments de connectique comme montré figure 1.

Encore pour l'étanchéité vis-à-vis du fluide 9, une première surface de joint 39 entoure l'ouverture 31 de chaque chambre 3, laquelle ouverture est alors située transversalement à l'axe 27, à l'opposé du fond 29.

Des moyens de fixation 40, tels des tirants axiaux, seront par ailleurs de préférence prévus pour venir en prise avec les corps des modules 3 afin d'assurer une fixation entre ces corps placés en contact et en regard. Après cela, le manchon 38 sera extérieurement mise en place.

Les corps 330 étant fixés ensemble, suivant l'axe 27 dans la disposition empilée considérée, la première surface de joint 39 sera donc plaquée soit contre une seconde surface de joint définie extérieurement à l'endroit du fond 29 d'un corps adjacent, dans une disposition relative des corps dos à dos, soit contre la première surface de joint d'un tel corps adjacent, dans une disposition relative des corps face à face. Au moins un joint 41 périphérique pourra être disposé d'un côté et/ou de l'autre.

En place des tirants et joints, on peut prévoir une solution soudée ou collée des modules entre eux, suivant l'axe 27.

On aura compris que l'ensemble 1 sera thermiquement performant grâce à son complexe MCP/isolant thermique qui permet d'associer :
- une isolation thermique des modules vis-à-vis de l'extérieur (EXT),
- à un effet retardateur lié aux changements d'états du/des matériaux MCP.

Le matériau thermiquement isolant 23 pourra être une laine de verre, une mousse de polyuréthane ou de polyisocyanurate, ou encore plus favorablement un matériau poreux, voire nano-poreux, tel qu'une silice ou un aérogel organique ou son pyrolat imprégné dans un réseau poreux et disposé dans une enceinte sous vide, pour définir donc au moins le panneau isolant sous vide PIV déjà évoqué.

En tant que matériau 15, ou constitution des éléments 13 contenus dans chaque volume intérieur 7 et avec lesquels le fluide 9 vient en échange thermique, on pourra prévoir une composition de caoutchouc telle que décrite dans EP2690141, à savoir une composition réticulée à base d'au moins un élastomère silicone « RTV » vulcanisé à température ambiante et comprenant au moins un matériau à changement de phase (MCP), ledit au moins un élastomère silicone présentant une viscosité mesurée à 25°C selon la norme ISO 3219 qui est inférieure ou égale à 5000 mPa.s. Dans cette composition, la matrice élastomère sera majoritairement constituée (i.e. selon une quantité supérieure à 50 pce, de préférence supérieure à 75 pce) d'un ou de plusieurs élastomères silicones « RTV ». Ainsi, cette composition pourra avoir sa matrice élastomère comprenant un ou plusieurs élastomères silicones selon une quantité totale supérieure à 50 pce et optionnellement un ou plusieurs autres élastomères (i.e. autres que des silicones « RTV ») selon une quantité totale inférieure à 50 pce.

Notamment un matériau à base de paraffine, d'acide gras eutectique (myristique-caprique) ou de sel hydraté eutectique (chlorure de calcium + potassium) pourrait aussi être utilisé en tant que matériau constitutif, seul ou non, des éléments précités. En autre alternative, le matériau MCP des éléments cités pourrait être à base d'acide gras, de paraffine, ou de sel eutectique ou hydraté. De fait, le choix du matériau et son conditionnement dans chaque élément concerné, en particulier sa dispersion au sein d'une matrice polymère, dépendra de l'application prévue et des résultats attendus.

A priori les éléments 13, ici individualisés, telles les sphères évoquées, seront disposés en vrac dans les volumes 7. Le rapport taille des structures individualisées / dimensions de chaque sous-volume sera alors défini en conséquence, afin de préférence d'optimiser les surfaces d'échange éléments 13 / fluide 9.

Ainsi, les éléments 13 à MCP ne seront pas des tubes ni, de préférence, ne seront disposés de façon organisée (comme ils le sont dans US 2011/0030915), afin de favoriser les conditions de mise en œuvre (pas de rangement) et les temps de séjour du fluide dans les chambres, en échange avec ces éléments 13, notamment en favorisant une circulation avec de nombreux méandres du fait des obstacles constitués par lesdits éléments 13 en travers de la circulation axiale 27 du fluide.

Autant il est important que les éléments 13 à MCP échangent largement avec le fluide 9, autant le matériau MCP 15 des éléments (15,19,23) de gestion thermique disposés autour des chambres ou volumes 7 devra former un ou plusieurs panneaux (structure périphériquement continue ou non comme on le voit sur les figures, notamment 2,3,11) qui, sans contact avec aucun fluide caloporteur ou frigorigène, travailleront thermiquement en fonction desdits échanges réalisés dans les chambres.

C'est en cela que le matériau MCP 15 des éléments périphériques est dit « de gestion thermique » : il participe à la gestion thermique des chambres. Ce n'est pas le cas des tubes 2b dans US 2011/0030915.

Ainsi, périphériquement disposé autour des chambres ou volumes 7, ce matériau placé dans son(ses) enveloppes souples ou flexibles, telle(s) 37,51, formera favorablement une ou plusieurs parois ou panneaux 19 de gestion thermique .

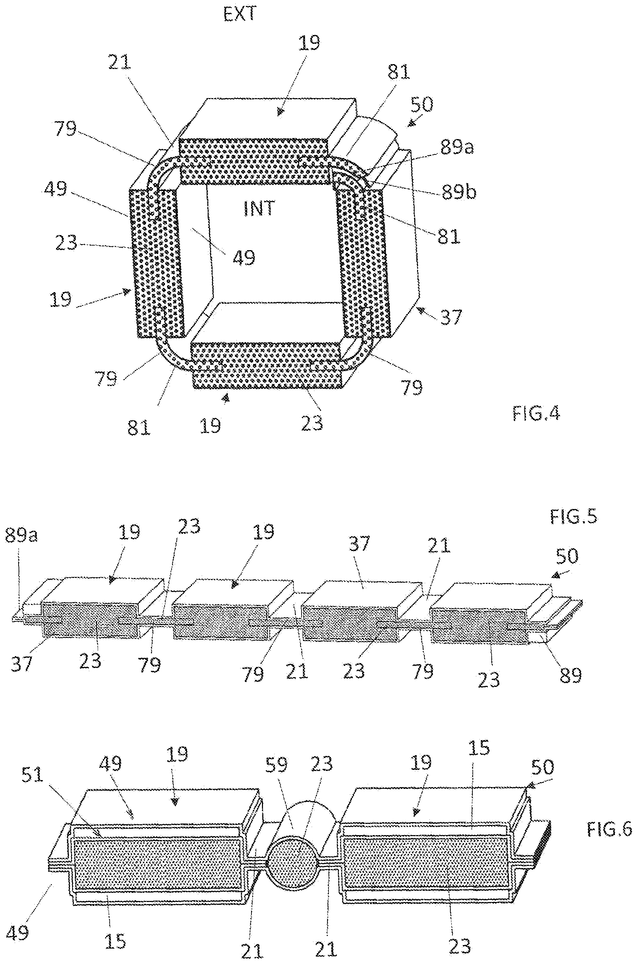

Si les poches isolantes périphériques 19 se succèdent de façon continue autour d'une paroi 5, et bien que ceci ne soit pas strictement imposé (une forme fermée sur elle-même, comme un manchon étant possible), il sera a priori préféré que les éléments 19-21 définissent ensemble un panneau articulable 50 (comme figures 4-6) pouvant :
- typiquement dans un état opérationnel, être fermé sur lui-même (figure 4, où la structure 50 est à imaginer à disposer ainsi autour d'une paroi 5 à isoler),
- et être déployé sensiblement à plat, par exemple pour être stocké et dans un état qui peut être non opérationnel (figure 5 ou 6).

Indépendamment d'une réalisation discontinue ou non des poches 19, ce qui suit présente, en référence notamment aux figures 3 et 5-8 une réalisation favorable de ces poches et des portions intermédiaires 21 si elles existent. Ainsi, même si seule une poche 19 est montrée, il suffit de reproduire le modèle ensuite de part et d'autre pour continuer la structure, si souhaité.

On peut ainsi constater qu'en solution tant continue que discontinue, chaque poche 19 à constitution PIV pourra comprendre alors (comme on le retrouve en vue éclaté figure 3) :
- au moins un premier élément, ou une première couche, 15 contenant le matériau MCP, à côté (opérationnellement à l'extérieur) duquel est disposé un second élément constitué dudit matériau isolant thermique 23, et
- au moins une enveloppe extérieure 37 fermée qui contient les premier et second éléments et est constituée d'au moins une feuille 49 flexible étanche au matériau MCP, avec :
   -- a) soit ladite feuille flexible 49 qui est en outre scellable (thermiquement/chimiquement, en 49a,49b autour de la poche) et étanche au matériau poreux 23 et à l'air (voire aussi à l'eau), de sorte qu'un vide d'air régnant dans l'enveloppe 37, un dit panneau isolant sous vide (PIV) est ainsi défini, comme montré figure 8,
   -- b) soit le second élément isolant thermique 23 contenu à l'intérieur d'une seconde enveloppe fermée 51 à feuille flexible 53 scellable et étanche au matériau poreux et à l'air (voire aussi à l'eau), de sorte qu'un vide d'air régnant dans la seconde enveloppe, un dit panneau isolant sous vide (PIV) est ainsi défini, comme montré figure 9.

A noter que deux couches 15 contenant un ou plusieurs matériaux MCP pourraient (comme figure 6) être disposées de part et d'autre de la couche de matériau poreux 23, voire aucune telle couche, si elle prévue uniquement dans la paroi 5, comme figure 2.

L'isolant thermique poreux 23 qui pourra donc être à nanostructure, sera donc confiné dans une feuille flexible 49 ou 53 qui ne laissera passer ni les vapeurs d'eau ni les gaz. Le PIV obtenu sera vidé de son air pour obtenir par exemple une pression de quelques millibars, puis pourra être scellé. Typiquement, la conductivité thermique λ d'un tel PIV sera de 0.004/0,008 W/m.K. L'utilisation de panneaux isolants sous vide devrait permettre d'atteindre une résistance thermique R = 5 m².K/W avec seulement 20 mm d'isolant.

Une possible composition du matériau 23 est la suivante : 80-85 % de dioxyde de silice (SiO2), 15-20 % de carbure de silicium (SiC) et possiblement 5 % d'autres produits (liant/charges). Une épaisseur de 0.4 à 3 cm est possible. Des exemples, pouvant ici s'appliquer, de panneau PIV et de matériau super-isolant sont en outre fournis dans PCT/FR2014/050267 et dans WO2014060906 (matériau poreux), respectivement.

Les solutions présentées ci-avant doivent permettre, dans un volume et poids acceptables notamment par des constructeurs aéronautiques ou automobiles, un stockage rapide d'une énergie thermique disponible au bout d'environ 6-10 minutes, le maintien de cette énergie pendant 12 à 15 heures, avant sa restitution rapide, typiquement quelques minutes (en particulier moins de 2-3mns), par exemple à un moteur lors d'une phase de démarrage à froid.

Les feuilles flexibles 49,53 du panneau PIV pourront typiquement être réalisées sous la forme d'un film multicouche comportant des films polymère (PE et PET) et de l'aluminium sous forme par exemple laminée (feuille d'épaisseur de l'ordre d'une dizaine de micromètre) ou métallisée (dépôt sous vide d'un film de quelques dizaines de nanomètre). La métallisation peut être effectuée sur une face ou sur les deux faces d'un film PE et plusieurs films PE métallisés peuvent être complexés pour former un film unique. Exemple de conception du film : - Scellement intérieur PE, environ 40 µm - Métallisation sous vide Al, env. 0.04 µm - Couche extérieure PET, environ 60 µm.

Dans le cas b) ci-avant où il y a une double feuille : intérieure 53 et extérieure 49, la feuille 49 pourra par contre n'être donc qu'un simple film polymère, tel un PE de 0.05 à 0.2 mm d'épaisseur, l'objet de cette feuille extérieure 49 pouvant alors n'être que de créer un simple sac pour contenir/réunir ensemble les éléments ou matelas 15 et 23.

A noter aussi que la/chaque enveloppe 37,51 pourra être typiquement formée de deux feuilles disposées de part et d'autre du/desdits éléments à matériau 15 et 23 et réunies ensemble, comme en 49a,49b figures 2,7 ou 10 (seules figures où ces repères sont marqués).

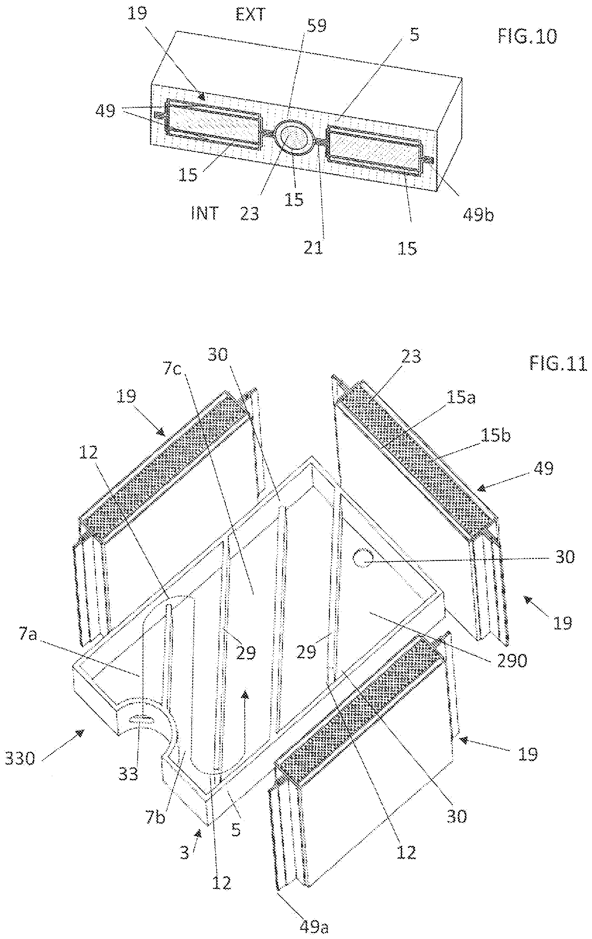

Quoi qu'il en soit, un avantage de ces feuilles, directement en contact l'une avec l'autre à l'endroit des portions intermédiaires 21, comme illustré, si elles sont plusieurs, (ou de cette feuille si elle est unique) est qu'on pourra tirer parti de leur continuation physique à l'endroit de ces portions 21 pour y créer une zone d'articulation (toutefois figée s'il y a intégration dans l'épaisseur de la paroi 5, comme figures 9 ou 10, sans rupture du vide créé par la constitution PIV.

Toutefois, l'utilisation simple de cette ou ces feuilles flexibles créera une discontinuité d'isolation thermique entre les deux poches consécutives 19 ainsi réunies.

Dans certains cas, les portions intermédiaires 21 pourraient présenter des surfaces non négligeables d'autant plus gênantes en termes de ponts thermiques ; mais on peut aussi avoir à placer un panneau 50 ou un manchon 47 en appui, par exemple pour le positionner correctement par rapport à son environnement.

D'autant plus dans ces cas, on pourra trouver un intérêt à ce qu'une portion renflée 59 soit définie entre deux zones d'articulation 21 (chacune formée par la ou les feuilles flexibles précitées appliquées l'une contre l'autre), chaque zone étant elle-même réunie latéralement d'un côté à la poche 19 concernée, ceci de façon régulière ou non dans la chaîne, comme montré figures 6 ou 10.

Chaque portion renflée 59 pourra contenir un isolant thermique 23, par exemple en rouleau (blanket en anglais). Il peut par exemple s'agir du produit souple, en rouleau, dénommé Spaceloft®, un isolant SIPA (Super Isolant à Pression Atmosphérique) proposé par la société ISOLProducts avec une conductivité thermique: λ = 0,01 à 0,02 W/m.K. Une couche MCP 15 (figure 10) pourra aussi être contenue, chacune de ces portions 59 étant donc favorablement enveloppé dans la/les feuilles flexibles précitées (pour maintenir une constitution PIV). Ces portions renflées 59 présenteront favorablement une surface extérieure convexe, permettant notamment un appui contre des surfaces extérieures complémentaires concaves.

Malgré tout, dans cette solution à portion(s) renflée(s) 59, les portions intermédiaires 21 ne sont pas totalement thermiquement isolantes.

Aussi, propose t'on (comme schématisé figure 5) que les portions intermédiaires 21 soient définies par au moins une structure 79 à matériau isolant thermique 23 (de préférence poreux pour être donc intégrée à la structure PIV globale), assurant une continuité d'isolation thermique entre lesdites deux poches. Le matériau isolant pourra être identique au matériau isolant thermique poreux des poches ; idem pour celui des zones 59.

Dans l'exemple de la figure 5, le matériau poreux (ici en forme de plaque) de chaque structure flexible 79 qui s'étend suivant l'épaisseur entre la(les) feuille(s) flexible(s) 49 de l'enveloppe 37, s'interrompt dans le matériau isolant thermique poreux 23 qui remplit les poches 19. Il pourrait toutefois y avoir continuité.

Plus épaisses que les tissus imprégnés, par exemple plus de 2.5 à 3 fois plus épaisses, et par exemple formées en bloc, comme schématisé, les poches 19 à matériau isolant thermique 23 seront typiquement plus rigides que les structures flexibles d'articulation 79.

Pour que le panneau 50 ainsi formé acquière sa constitution PIV, sous vide partiel, on procédera bien sûr à une telle mise sous vide, avec scellement, après que les couches ou plaques de matériaux poreux 23,81 aient été toutes enveloppées par la ou les feuilles étanches flexibles 49.

Pour réaliser les structures 79, on pourra en particulier utiliser un support flexible en maillage polymère (par exemple un tissé, non tissé organique ou inorganique, ou une nappe) tel un polyester ou un polyamide de quelques mm d'épaisseur imprégné d'un aérogel 81, par exemple de silice, ou son pyrolat (aérogel pyrolysé, étant précisé que cette alternative de pyrolat s'applique à chaque cas de la présente description où un matériau poreux thermiquement isolant est concerné).

Pour information, une structure d'isolation présentée ci-avant à poches PIV 19 avec pour matériau cœur un aérogel nano-poreux ou son pyrolat pourra présenter une conductivité thermique inférieure à 10mW.m-1.K-1 pour une pression interne de 2 à 5 à 10⁻³ Pa. La dépression dans les poches, voire les portions 21, pourra être celle habituelle des PIV : 10⁻³ à 10³ Pa.

En liaison avec notamment les figures 6,8,10, on notera encore, comme déjà mentionné, qu'il pourra être avantageux que certaines au moins des poches à constitution PIV et/ou des zones de portions intermédiaires contiennent au moins un matériau MCP, ce matériau 15 étant identique à ou différent de celui des éléments 13 à matériau MCP.

S'il y a deux couches de ce matériau, la seconde couche sera, là où les deux couches existent, disposée autour de la première couche, avec interposition entre elles du matériau 23. La première température de changement d'état de la première couche sera a priori supérieure à la seconde température, différente, de changement d'état de la seconde couche, de façon à isoler au mieux l'intérieur, en combinaison avec les poches à constitution PIV 19 interposées entre ces couches.

S'il n'y a qu'une seule couche de ce matériau 15, elle sera donc favorablement entourée par la couche de matériau 23, à l'endroit des poches 19, et par le matériau 81 si les portions intermédiaires flexibles 21 en sont pourvues. Sur plusieurs figures, on a d'ailleurs marqué INT le côté du volume 7 et EXT l'(environnement) extérieur.

Figure 4, on pourra encore remarquer en 89a,89b, des moyens de maintien sur elle-même de la bande 50, une fois pliée sur elle-même. On peut imaginer une solution par clip, par bande auto-agrippante, type Velcro (TM), ou autre.

Il est aussi à noter que les poches 19 ne seront pas nécessairement strictement planes. Ainsi, une forme courbe est possible, comme dans l'exemple de la figure 3, Cette forme peut être réalisée en raccourcissant la longueur de la feuille de l'enveloppe 37 d'un côté par rapport à la longueur de la feuille de l'autre côté. Une fois scellée, la poche se cintrera naturellement sous la tension mécanique exercée.

Comme schématisé figures 9,11, on notera encore que, pour favoriser les échanges thermiques dans les chambres 7, et donc le rendement de l'unité 1, on préfèrera que des chicanes 12 soient créées dans l'unité 1, de sorte que le fluide 9 y circulant y suive un chemin qui serpentera.

La figure 9 permet de comprendre que de telles chicanes 12 puissent être formées par le fait que chaque paroi transversale 29 et son passage traversant 30 forment un ralentisseur à la libre circulation du fluide entre son entrée 33 et sa sortie 35.

De préférence, pour accentuer cet effet « chicanes », les passages 30 entre les corps seront favorablement décalés d'un passage au suivant, parallèlement à l'axe 27, comme schématisé figure .

Dans la variante de la figure 11, on a imaginé un module 3 unique à corps 330 unique, avec par exemple une entrée latérale 33 à travers une zone de sa paroi périphérique 5. Les chicanes 12 sont (essentiellement) créées ici par les cloisons internes 29 qui, à l'intérieur de l'espace 7 délimité par la paroi périphérique 5 et le fond percé 290, scindent cet espace en sous-volumes 7a,...7c.

Chaque cloison 29 s'interrompant à l'une de ses extrémités latérales avant d'atteindre la paroi 5, c'est là qu'est créé chaque passage 30 qui, en liaison avec la cloison concernée et de préférence une alternance dans l'extrémité latérale ainsi ouverte, forme une chicane. Arrivé au dernier sous-volume, le fluide sort du corps par le fond percé. Chaque sous-volume contient des éléments 13.

Dans les deux cas (figures 9 et 11), la circulation du fluide est donc sensiblement suivant une succession de S (voir flèche figure 11).

La figure 9 permet également de conforter le fait que certains au moins des éléments de gestion thermique pourront, placés dans les poches 19, être intégrés dans le matériau de constitution des parois extérieures 5 des corps, même si les poches ne sont pas représentées sur la figure ; seules le sont les couches 15 et 23, étant aussi précisé qu'une ou plusieurs telles poches pourront ou non être disposés dans le fond 29.

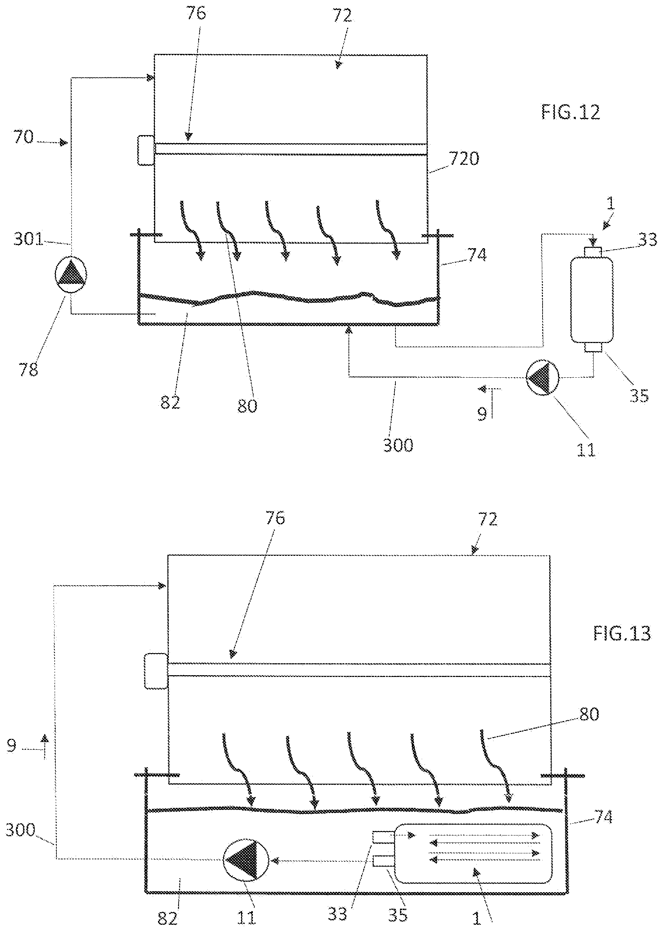

Les figures 12,13 montrent quant à elles l'utilisation opérationnelle d'au moins un bloc modulaire 3 ou d'une unité 1 à plusieurs blocs sur le circuit d'huile 70 d'un moteur 72, étant précisé que l'utilisation de ces blocs ou de l'unité sur un circuit d'eau (ou autre liquide que l'huile) sera intéressante, par exemple sur un circuit de refroidissement de moteur, en couplage avec un échangeur gaz(air par ex.)/liquide (eau par ex.) ou liquide (eau douce par ex.)/liquide (eau de mer par ex.).

Le circuit 70 définit ici un chemin de circulation d'huile sur lequel sont disposés, en communication fluide entre eux, un carter d'huile 74 et des organes fonctionnels du moteur à huiler, tel les paliers de bielles et de vilebrequin, mais aussi de l'arbre à cames et son dispositif d'entraînement, 76. Le carter 74, dont la cuve (a priori métallique) est vissée sous le bloc moteur 720, avec un joint d'étanchéité, contient l'huile nécessaire à la lubrification des éléments mobiles du bas moteur et du haut moteur. L'huile y est puisée par la crépine de la pompe à huile 78 qui la distribue sous pression, de préférence via un filtre à huile, aux différents organes (vilebrequin, bielles, arbre à cames...). L'huile peut redescendre ensuite par simple gravité ; flèches 80. Le carter est équipé en son point le plus bas d'une vis de purge avec rondelle d'étanchéité, dédiée à la vidange périodique du moteur.

Deux montages sont plus particulièrement présentés, à titre d'exemples non limitatifs.

Dans le premier, schématisé figure 12, une unité 1, comme celle de la figure 1, assemblée, est raccordée via la connectique 33,35 à la branche 300 du circuit d'huile 70 qui communique avec le bain d'huile 82 du carter 74. La pompe 11 assure la circulation d'huile dans l'unité et la branche 300. Ainsi, le bain d'huile 82 va pouvoir bénéficier d'une huile à température appropriée, en évitant en particulier une température trop basse en hiver (favorable à un démarrage à froid). Une autre pompe 78 prélève de l'huile dans le bain pour la distribuer vers les organes concernés du moteur, via la branche 301 du circuit 70. Cette solution peut être adaptée à une lubrification "par carter sec". L'huile ne sera alors plus contenue dans le carter, mais dans un réservoir indépendant où elle sera directement puisée, avant de passer dans l'unité 1, pour être ensuite acheminée vers les zones à lubrifier, le retour se faisant directement dans le réservoir.

Dans le second montage, schématisé figure 13, une unité 1 (qui pourrait toujours ne comprendre qu'un bloc, comme celui de la figure 11, avec sa connectique), est placée via la connectique d'entrée/sortie de fluide 33,35 directement sur le circuit fermé d'huile 300 qui passe par les organes précités concernés du moteur 72 et le carter 74. La pompe 11 assure la circulation d'huile dans l'unité 1 et tout le circuit 300. L'unité 1 est disposée dans le carter d'huile 74. L'huile passe ainsi du bain 82 dans l'unité 1 d'où elle est prélevée pour circuler vers lesdits organes à huiler. Une telle intégration permet des gains de place, voire de poids et de rendements (potentiellement moins de perte de charge et protection thermique qui peut encore être accrue en isolant la paroi du carter 74).

On aura compris que ci-avant le terme « huile » est à comprendre au sens large, comme « un fluide lubrifiant pour le moteur ». Et on aura aussi noté l'intérêt à ce que le circuit de lubrification du moteur 70 définisse donc un chemin de circulation pour le liquide lubrifiant sur lequel seront disposés les moyens (11 ou 78) de mise en circulation du liquide lubrifiant, le carter 74, les organes fonctionnels (tel 76) du moteur à lubrifier, à placer en échange thermique avec le liquide 9 provenant de l'unité 1, et l'unité 1 contenant au moins le volume 7:
- lequel renferme les éléments 13 de stockage et de restitution ultérieure d'énergie thermique, à matériau MCP, placés en échange thermique avec ledit liquide lubrifiant 9,
- et autour duquel sont donc disposés au moins les première et seconde couches 15,23.

## Revendications

1. Unité de stockage et de restitution d'une énergie thermique comprenant :
- plusieurs blocs (3) modulaires, chacun comprenant :
-- des éléments (13) individualisés de stockage et de restitution de ladite énergie thermique comprenant au moins un matériau MCP,
-- un corps (330) comportant :
--- une chambre (7) de réception des éléments (13) à matériau MCP, la chambre étant définie à l'intérieur de parois extérieures du corps réunies par un fond (29) fermant d'un côté la chambre,
--- au moins un passage (30) de communication entre les chambres des blocs, pour la circulation du fluide entre deux chambres adjacentes, en échange thermique avec lesdits éléments dans chaque chambre,
- des moyens (40) de fixation adaptés pour fixer ensemble les blocs (3), de façon que ledit fluide puisse circuler entre eux via les passages de communication,
- et des éléments (15,19,23) de gestion thermique des chambres, disposés autour desdites chambres et dont certains au moins comprennent un matériau isolant thermique (23),
**caractérisée en ce que** :
- chaque chambre (7) est ouverte sur un côté (31) autre que le fond (29), pour y placer ou en retirer lesdits éléments à matériau MCP, et les blocs (3) modulaires comprennent individuellement en outre une surface (39) de joint entourant le côté ouvert de la chambre, pour assurer une étanchéité vis-à-vis du fluide, de sorte que deux blocs (3) modulaires adjacents puissent être disposés avec leurs chambres (7) indifféremment face à face ou dos à dos, les blocs modulaires étant empilés suivant un axe (27), et les passages de communication (30) traversant les fonds (29) des chambres (7),
- et certains au moins des éléments (15,19,23) de gestion thermique des chambres comprennent un matériau MCP (15).

2. Unité selon la revendication 1, où les éléments (13) à matériau MCP autour desquels circule le fluide sont disposés en vrac dans les chambres (7).

3. Unité selon l'une des revendications précédentes, où certains au moins des éléments de gestion thermique comprenant un matériau MCP sont disposés dans au moins une enveloppe (19,37,51) flexible formant un ou plusieurs panneaux (19).

4. Unité selon la revendication 3, où l'enveloppe (19,37,51) flexible contient aussi du matériau isolant thermique (23).

5. Unité selon l'une des revendications précédentes, où certains au moins des éléments de gestion thermique comprenant un matériau isolant thermique (23) sont sous vide d'air partiel, pour définir des panneaux PIV.

6. Unité selon l'une des revendications précédentes, où le corps (330) de chaque bloc (3) intègre dans la paroi extérieure (5) au moins une cavité (17) qui reçoit une partie au moins du matériau MCP (15) desdits éléments (15,19,23) de gestion thermique des chambres.

7. Unité selon la revendication 5, où les corps sont empilés ensemble de façon qu'extérieurement lesdites parois extérieures (5) définissent des appuis contre lesquels sont appliqués les panneaux PIV, lesquels sont bloqués latéralement par des excroissances (22) qui maintiennent un espace (24) ayant sensiblement l'épaisseur desdits panneaux PIV, entre les parois extérieures des corps et une enveloppe extérieure (38) e protection mécanique qui entoure les blocs (3).

8. Unité selon la revendication 3, seule ou en combinaison avec l'une des revendications 4 à 7 où, pour laisser le fluide circuler d'une chambre à une autre, lesdits passages (30) sont décalés d'un passage au suivant parallèlement audit axe (27), pour définir des chicanes.

9. Unité selon l'une des revendications précédentes, où les blocs (3) étant formés en pile, les premier et/ou dernier blocs de la pile reçoivent au moins un couvercle qui, face à une dite ouverture (31) de chambre, ferme celle-ci, chaque couvercle étant pourvu d'un dit élément d'isolation thermique comprenant un matériau thermiquement isolant (23) et d'une connectique (33,35) pour la circulation du fluide (9) entre ladite unité et un circuit (70) extérieur.

10. Circuit de lubrification d'un moteur définissant un chemin de circulation d'un lubrifiant sur lequel sont disposés, en communication fluide, des organes fonctionnels (76) du moteur à lubrifier, un carter de lubrifiant (74) et une unité (1) selon l'une des revendications précédentes.

## Patentansprüche

1. Einheit zur Speicherung und Rückgewinnung von Wärmeenergie, enthaltend:
- mehrere modulare Blöcke (3), die jeweils enthalten:
-- vereinzelte Elemente (13) zur Speicherung und Rückgewinnung der Wärmeenergie, die zumindest ein PCM-Material enthalten,
-- einen Körper (330), enthaltend:
--- eine Kammer (7) zum Aufnehmen von Elementen (13) aus PCM-Material, wobei die Kammer innerhalb von Außenwänden des Körpers definiert ist, die durch einen Boden (29) miteinander verbunden sind, der die Kammer auf einer Seite verschließt,
--- zumindest einen Verbindungsdurchgang (30) zwischen den Kammern der Blöcke für die Strömung des Fluides zwischen zwei aneinandergrenzenden Kammern in Wärmeaustausch mit den Elementen in jeder Kammer,
- Befestigungseinrichtungen (40), die dazu geeignet sind, die Blöcke (3) aneinander zu befestigen, so dass das Fluid zwischen ihnen über die Verbindungsdurchgänge strömen kann,
- und Elemente (15, 19, 23) zum Wärmemanagement der Kammern, die um die Kammern herum angeordnet sind und von denen zumindest einige ein Wärmedämmmaterial (23) enthalten,
**dadurch gekennzeichnet, dass**
- jede Kammer (7) auf einer anderen Seite (31) als dem Boden (29) offen ist, um die Elemente aus PCM-Material darin einzusetzen bzw. herauszunehmen, und die modularen Blöcke (3) ferner jeweils eine Dichtfläche (39) enthalten, die die offene Seite der Kammer umgibt, um eine Fluiddichtheit sicherzustellen, so dass zwei aneinandergrenzende modulare Blöcke (3) mit ihren Kammern (7) beliebig vorderseitig oder rückseitig gegenüberliegend angeordnet werden können, wobei die modularen Blöcke entlang einer Achse (27) gestapelt sind und die Verbindungsdurchgänge (30) die Böden (29) der Kammern (7) durchsetzen,
- und zumindest einige der Elemente (15, 19, 23) zum Wärmemanagement der Kammern ein PCM-Material (15) enthalten.

2. Einheit nach Anspruch 1,
wobei
die Elemente (13) aus PCM-Material, um welche herum das Fluid strömt, lose in den Kammern (7) angeordnet sind.

3. Einheit nach einem der vorangehenden Ansprüche,
wobei
zumindest einige der Wärmemanagementelemente, die ein PCM-Material enthalten, in zumindest einer biegsamen Umhüllung (19, 37, 51) angeordnet sind, die ein oder mehrere Paneele (19) bildet.

4. Einheit nach Anspruch 3,
wobei
die biegsame Umhüllung (19, 37, 51) auch das Wärmedämmmaterial (23) beinhaltet.

5. Einheit nach einem der vorangehenden Ansprüche,
wobei
zumindest einige der Wärmemanagementelemente, die ein Wärmedämmmaterial (23) enthalten, teilweise unter Luftvakuum stehen, um PIV-Paneele zu definieren.

6. Einheit nach einem der vorangehenden Ansprüche,
wobei
der Körper (330) eines jeden Blocks (3) in der Außenwand (5) zumindest einen Hohlraum (17) umfasst, welcher zumindest einen Teil des PCM-Materials (15) der Elemente (15, 19, 23) zum Wärmemanagement der Kammern aufnimmt.

7. Einheit nach Anspruch 5,
wobei
die Körper so aneinander gestapelt sind, dass die Außenwände (5) außen Abstützungen definieren, an welche die PIV-Paneele angedrückt werden, die seitlich von Vorsprüngen (22) gesichert werden, welche einen Freiraum (24), der im Wesentlichen die Dicke der PIV-Paneele hat, zwischen den Außenwänden der Körper und einer äußeren Umhüllung (38) zum mechanischen Schutz freilassen, welche die Blöcke (3) umgibt.

8. Einheit nach Anspruch 3 allein oder in Kombination mit einem der Ansprüche 4 bis 7,
wobei
zum Strömen des Fluides von einer Kammer zu einer weiteren die Durchgänge (30) von einem Durchgang zum nächsten parallel zur Achse (27) versetzt sind, um Prallbleche zu definieren.

9. Einheit nach einem der vorangehenden Ansprüche,
wobei
bei stapelweise gebildeten Blöcken (3) der erste und/oder letzte Block des Stapels zumindest eine Abdeckung aufnimmt, die einer Kammeröffnung (31) gegenüberliegend diese verschließt, wobei jede Abdeckung mit einem Wärmedämmelement, das ein Wärmedämmmaterial (23) enthält, und mit einem Verbinder (33, 35) zum Strömen des Fluides (9) zwischen der Einheit und einem externen Kreis (70) versehen ist.

10. Schmierkreis für einen Motor, der einen Schmierstoffströmungspfad definiert, an dem Funktionselemente (76) des zu schmierenden Motors, ein Schmierstoffgehäuse (74) und eine Einheit nach einem der vorangehenden Ansprüche in Strömungsverbindung angeordnet sind.

## Claims

1. A unit for storing and releasing thermal energy including:
- a plurality of modular blocks (3), each block including:
-- individualised elements (13) for storing and releasing said thermal energy including at least one PCM,
-- a body (330) comprising:
--- a chamber (7) receiving elements (13) of PCM, the chamber being defined within the outer walls of the body assembled by a bottom (29) closing on one side the chamber,
--- at least one communication passage (30) between the chambers of the blocks, for the circulation of the fluid between two adjacent chambers, in heat exchange relationship with said elements in each chamber,
- attachment means (40) suitable for attaching together the blocks (3), such that said fluid can circulate between same via the communication passages,
- and elements (15, 19, 23) for the thermal management of the chambers, arranged around said chambers and at least some of which include a thermally insulating material (23),
**characterised in that**:
- each chamber (7) is open on one side (31) other than the bottom (29), for placing therein or removing therefrom said elements of PCM, and the modular blocks (3) further individually include a sealing surface (39) surrounding the open side of the chamber, for providing sealing in relation to the fluid, such that two adjacent modular blocks (3) can be arranged with their chambers (7) thereof face to face or back to back, the modular blocks being stacked along an axis (27), and the communication passages (30) passing through the bottoms (29) of the chambers (7),
- and at least some of the elements (15, 19, 23) for the thermal management of the chambers include a PCM (15).

2. A unit according to claim 1, wherein the elements (13) of PCM type around which the fluid circulates are arranged loosely in the chambers (7).

3. A unit according to one of the preceding claims, wherein at least some of the thermal management elements including a PCM are arranged in at least one flexible envelope (19, 37, 51) forming one or more panels (19).

4. A unit according to claim 3, wherein the flexible envelope (19, 37, 51) also contains thermally insulating material (23).

5. A unit according to one of the preceding claims, wherein at least some of the thermal management elements including a thermally insulating material (23) are under partial vacuum, for defining VIP.

6. A unit according to one of the preceding claims, wherein the body (330) of each block (3) integrates into the outer wall (5) at least one cavity (17) which receives at least one portion of the PCM (15) of said elements (15, 19, 23) for the thermal management of the chambers.

7. A unit according to claim 5, wherein the bodies are stacked together so that externally said outer walls (5) define supports against which are applied the VIP, which are blocked laterally by protrusions (22) that maintain a space (24) having substantially the thickness of said VIP, between the outer walls of the bodies and an outer envelope (38) of mechanical protection that surrounds the blocks (3).

8. A unit according to claim 3, alone or in combination with one of claims 4 to 7 wherein, to allow the fluid to circulate from one chamber to another, said passages (30) are offset from one passage to the next, parallel to said axis (27), to define baffles.

9. A unit according to one of the preceding claims, wherein the blocks (3) being formed in a stack, the first and/or last blocks of the stack receive at least one cover which, opposite a said chamber opening (31), closes same, each cover being provided with a said thermal insulation element including a thermally insulating material (23) and a connector (33, 35) for the circulation of the fluid (9) between said unit and an outer circuit (70).

10. A circuit for lubricating an engine defining a path of circulation of a lubricant, whereon are arranged, in fluid communication, functional components (76) of the engine to be lubricated, a lubricant sump (74) and a unit (1) according to anyone of the preceding claims.
